# EUROPEAN PATENT SPECIFICATION

(11) **EP 3 732 222 B1**
(45) Date of publication and mention of the grant of the patent: **17.08.2022**
(21) Application number: 18808615.1
(22) Date of filing: 13.11.2018
(51) Int. Cl.: C08G 18/72, B32B 27/40, C08G 18/76, C08G 18/32, C08G 18/42, C08G 18/48, C09J 175/04

(54) **TWO-COMPONENT SOLVENTLESS ADHESIVE COMPOSITIONS FOR ADHESION TO POLYMERIC BARRIER SUBSTRATES**
LÖSUNGSMITTELFREIE ZWEIKOMPONENTEN-KLEBSTOFFZUSAMMENSETZUNGEN ZUR HAFTUNG AUF POLYMEREN SPERRSUBSTRATEN
COMPOSITIONS ADHÉSIVES SANS SOLVANT À DEUX COMPOSANTS POUR ADHÉRENCE À DES SUBSTRATS DE BARRIÈRE POLYMÈRE

(30) Priority: 27.12.2017 IT 201700149966
(43) Date of publication of application: 04.11.2020
(73) Proprietor: Dow Global Technologies LLC, Midland, MI 48674 (US); Rohm and Haas Company, Collegeville, PA 19426 (US)
(72) Inventor: HABLOT, Elodie, 8810 Horgen (CH); WU, Jie, Lake Jackson, TX 77566 (US); SEHANOBISH, Kalyan, Midland, MI 48674 (US); SCHMIDT, Thorsten, 8810 Horgen (CH); ZUPANCIC, Joseph J., Ringwood, IL 60072 (US); VINCI, Daniele, 8810 Horgen (CH); FRASCONI, Marco, 22076 Mozzate (IT); LI, Tuoqi, Lake Jackson, TX 77566 (US)
(74) Representative: Boult Wade Tennant LLP
(86) International application number: PCT/US2018/060644
(87) International publication number: WO 2019/133121

(56) References cited:
- EP-A1- 1 772 506
- WO-A1-2017/196529
- WO-A1-2017/196530

## Description

### Reference to Related Applications

The present application claims the benefit of Italian Application No. 102017000149966, filed on December 27, 2017.

### Field of the Disclosure

The instant disclosure relates to solventless adhesive compositions. The disclosed adhesive compositions comprise amine-initiated polyols providing for laminate structures having improved conversion efficiency, particularly when used in laminated structures having polymeric barrier substrates therein, e.g., polyethylene ("PE") films, polyamide ("PA") films, ethylene vinyl alcohol ("EVOH") films, etc.

In some embodiments, the adhesive compositions comprise an isocyanate component and a polyol component formulated to be applied to two substrates independently which are then brought together to mix and react the components of the adhesive composition. In particular, one component of the adhesive composition is configured to be uniformly applied to a surface of a first substrate and the other component of the adhesive composition is configured to be applied to a surface of a second substrate. The first and second substrates are subsequently brought together, thereby mixing and reacting the two components to form an adhesive between the first and second substrates. In this way, the adhesive can then be cured, thereby bonding the first and second substrates.

The disclosed adhesive compositions include a blend of isocyanates in the isocyanate component which reduces issues associated with CO₂ creation during laminate rewinding and a silicone-based additive (*e.g.,* an anti-foaming agent, a wetting agent, etc.) in the polyol component which improves optics at higher lamination speeds to polymeric barrier substrates,.

### Background and Summary of the Disclosure

Adhesive compositions are useful for a wide variety of purposes. For instance, adhesive compositions are used to bond together substrates such as polyethylene, polypropylene, polyester, polyamide, metal, metallized, paper, or cellophane to form composite films, *i.e.,* laminates. The use of adhesives in different end-use applications is generally known. For example, adhesives can be used in the manufacture of film/film and film/foil laminates used in the packaging industry, especially for food packaging. Adhesives used in laminating applications, or "laminating adhesives," can be generally placed into three categories: solvent-based, water-based, and solventless. The performance of an adhesive varies by category and by the application in which the adhesive is applied.

WO2017/196530 A1 relates to a two-component solventless polyurethane adhesive compositions comprising an isocyanate component and a polyol component comprising at least one highly-reactive amine-initiated polyol.

WO2017/96529 A1 relates to a two-component solventless adhesive composition is disclosed, the adhesive composition comprising an isocyanate component comprising at least one isocyanate, and a polyol component comprising at least one amine-initiated polyol having a functionality of from 3 to 8 and a hydroxyl number of from 20 to 1,000.

EP1772506 A1 relates to a two-component curable solventless adhesive.

Solventless laminating adhesives can be applied up to one hundred percent solids without either organic solvent or an aqueous carrier. Because no organic solvent or water has to be dried from the adhesive upon application, these adhesives can be run at high line speeds and are preferable in applications requiring quick adhesive application. Solvent and water-based laminating adhesives are limited by the rate at which the solvent or water can be effectively dried and removed from the laminate structure after application of the adhesive. For environmental, health, and safety reasons, laminating adhesives are preferably aqueous or solventless.

Within the category of solventless laminating adhesives, there are many varieties. One particular variety includes premixed, two-component, polyurethane-based laminating adhesives. Typically, a two-component polyurethane-based laminating adhesive includes a first component comprising an isocyanate-containing prepolymer and/or a polyisocyanate and a second component comprising a polyol. The prepolymer can be obtained by the reaction of excess isocyanate with a polyether and/or polyester containing two or more hydroxyl groups per molecule. The second component comprises a polyether and/or polyester initiated with two or more hydroxyl groups per molecule. The two components are combined in a predetermined ratio, or "premixed," and then applied on a first substrate ("carrier web"). The first substrate is then brought together with a second substrate to form a laminate structure.

Additional layers of substrate can be added to the structure with additional layers of adhesive composition located between each successive substrate. The adhesive is then cured, either at room temperature or elevated temperature, thereby bonding the substrates together.

Further processing of the laminate structure depends upon the curing speed of the adhesive. The curing speed of the adhesive is indicated by the time in which the mechanical bond between the laminated substrates takes to become sufficient to allow for further processing and the laminate is in compliance with applicable regulations (*e.g*., food contact regulations). Slow curing speed results in lower conversion efficiency. Premixed two-component solventless laminating adhesives, compared to traditional solvent-containing adhesives, exhibit weak initial bonds and slow curing speed. The general trend in the converting industry is towards faster curing laminating adhesives. Faster curing improves the operational efficiency for converters. Specifically, quickly moving finished products out of a warehouse increases production capacity and flexibility for handling last minute orders (*e.g.,* retailer promotional campaigns). In order to increase operational efficiency, an adhesive composition with a reactivity much higher than existing adhesive compositions should be used to form laminates. However, such adhesive compositions have demonstrated limitations when used in laminate structures comprising polymeric barrier substrates. At relatively-high line speeds (*e.g.,* in excess of 250 m/min), defects in the produced laminates can be visually observed. These defects are noticeable even at relatively slower line speeds (*e.g.,* less than 150 m/min), though less severe. The defects are attributable to, *inter alia,* wettability failures and air entrainment during the lamination process, and CO₂ creation when the laminate is rewound.

Accordingly, two-component solventless polyurethane-based laminating adhesive compositions with improved bond strength, faster curing speeds, and enhanced adhesion to polymeric barrier substrates are desirable.

Two-component solventless polyurethane adhesive compositions are disclosed. The disclosed adhesive compositions are particularly suitable for use in laminate structures comprising a polymeric barrier substrate. In some embodiments, the solventless adhesive compositions include an isocyanate component including an isocyanate blend. The isocyanate blend can include at least two selected from the group consisting of an aromatic isocyanate, an aliphatic isocyanate, a cycloaliphatic isocyanate, and combinations thereof. The solventless adhesive compositions further include a polyol component including a highly-reactive amine-initiated polyol and a silicone-based additive. The amine-initiated polyol can further comprise a functionality of from about 2 to about 12, a hydroxyl number of from about 5 to about 1,830, and a molecular weight of from about 500 to about 20,000. The silicone-based additive can be an anti-foaming agent, a wetting agent, or a combination thereof.

The disclosed adhesive compositions exhibit fast curing rates relative to existing two-component solventless adhesive compositions when used in laminate structures including polymeric barrier substrates. Because the disclosed adhesive compositions are formulated to be more highly reactive and exhibit faster curing rates than existing adhesive compositions, they are not ideally suited for use with existing adhesive application apparatuses. This is because the two components react very quickly, causing the adhesive to gel and be unfit for application to a substrate. For this reason, the disclosed adhesive compositions are formulated such that the isocyanate and polyol components are applied separately on two different substrates, instead of being premixed and applied on a carrier web.

In particular, the disclosed adhesive compositions are formulated such the isocyanate component can be uniformly applied to a surface of a first substrate and the polyol component can be applied to a surface of a second substrate. The surface of the first substrate is then brought into contact with the surface of the second substrate to mix and react the two components, thereby forming a laminate. The adhesive composition is then curable.

### Detailed Description of the Disclosure

The two-component solventless adhesive composition according to this disclosure comprises an isocyanate component and a polyol component, as discussed above.

### Isocyanate Component

In some embodiments, the isocyanate component comprises an isocyanate blend which includes two or more isocyanate blended together. The isocyanates can be selected from the group consisting of an isocyanate prepolymer, an isocyanate monomer, a polyisocyanate (*e.g*., dimers, trimmers, etc.), and combinations of two or more thereof. As used herein, a "polyisocyanate" is any compound that contains two or more isocyanate groups. The isocyanate prepolymer is the reaction product of reactants comprising an isocyanate and a polyol. As used herein, the "isocyanate prepolymer" can be a polyisocyanate itself.

In some embodiments, the isocyanate component comprises a functionality of from 1.5 to 10, or from 1.8 to 5, or from 2 to 3. As used with respect to the isocyanate component, "functionality" refers to the number of hydroxyl reactive sites per molecule. Compounds having isocyanate groups, such as the isocyanate component, may be characterized by the parameter "%NCO," which is the amount of isocyanate groups by weight based on the weight of the compound. The parameter %NCO is measured by the method of ASTM D 2572-97 (2010). The disclosed isocyanate component has a %NCO of at least 3%, or at least 6%, or at least 10%. In some embodiments, the isocyanate component has a %NCO not to exceed 25%, or 18%, or 14%.

Further, the isocyanate blend comprises a free monomer content of from 0 to 50%, or from 5 to 40%, or from 10 to 30%. Still further, the isocyanate blend comprises a molecular weight of from 200 to 3,000 g/mol, or from 300 to 2,000 g/mol, or from 500 to 1,000 g/mol. Even further, the isocyanate component has viscosity at 25°C of from 300 to 40,000 mPa-s, or from 500 to 20,000 mPa-s, or from 1,000 to 10,000 mPa-s, as measured by the method of ASTM D2196.

In some embodiments, the isocyanates of the isocyanate blend comprise at least two selected from the group consisting of an aromatic isocyanate, an aliphatic isocyanate, a cycloaliphatic isocyanate, and combinations thereof. An "aromatic polyisocyanate" is an isocyanate that contains one or more aromatic rings. An "aliphatic polyisocyanate" contains no aromatic rings. A "cycloaliphatic polyisocyanate" is a subset of aliphatic polyisocyanates, wherein the chemical chain is ring-structured.

Examples of suitable aromatic isocyanates suitable for use according to the disclosure include, but are not limited to, isomers of methylene diphenyl diisocyanate ("MDI"), such as 4,4'-MDI, 2,2'-MDI and 2,4'-MDI, isomers of toluene-diisocyanate ("TDI") such as 2,4-TDI, 2,6-TDI, isomers of naphthalene-diisocyanate ("NDI") such as 1,5-NDI, and combinations of two or more thereof. Preferred are isomers of MDI, particularly a mixture of 4,4'-MDI and 2,4'-MDI (*i.e.,* liquid MDI) or 4,4'-MDI (*i.e.,* solid MDI).

Examples of suitable aliphatic and cycloaliphatic isocyanates suitable for use according to the disclosure include, but are not limited to, isomers of hexamethylene diisocyanate ("HDI"), isomers of isophorone diisocyanate ("IPDI"), isomers of xylene diisocyanate ("XDI"), isomers of norbornane diisocyanate ("NBDI"), isomers of tetramethylxylylene diisocyanate ("TMXDI"), and combinations thereof.

In some embodiments, the isocyanate blend includes isomers of methylene diphenyl diisocyanate and hexamethylene diisocyanate. In some embodiments, the isocyanate blend includes isomers of methylene diphenyl diisocyanate, hexamethylene diisocyanate, and toluene diisocyanate. In still other embodiments, the isocyanate blend can include any combination of two or more of the isocyanates described herein.

The amount of the isocyanate blend in the adhesive composition is, by weight based on the weight of the adhesive composition (*i.e.,* the total weight of the isocyanate component and the polyol component), at least 5 wt%, or at least 10 wt%, or at least 20 wt%. The amount of the isocyanate blend in the adhesive composition is, by weight based on the weight of the adhesive composition, not to exceed 100 wt%, or not to exceed 95 wt%, or not to exceed 90 wt%.

The isocyanate component can further comprise other constituents commonly known to those of ordinary skill in the art.

### Polyol Component

In some embodiments, the polyol component comprises a highly-reactive amine-initiated polyol and a silicone-based additive.

### Amine-Initiated Polyol

Inclusion of the amine-initiated polyol in the polyol component provides for higher reactivity and faster curing than traditional polyols used in existing two component solventless adhesive compositions. The amine-initiated polyol comprises primary hydroxyl groups and a backbone incorporating at least one tertiary amine. In some embodiments, the polyol component can also comprise another type of polyol which is a non-amine-initiated polyol. Each polyol type may include one kind of polyol. Alternatively, each polyol type may include mixtures of different kinds of polyols. In some embodiments, one polyol type may be one kind of polyol whereas the other polyol type may be a mixture of different kinds of polyols.

The amine-initiated polyol comprises primary hydroxyl groups and a backbone incorporating at least one tertiary amine. In some embodiments, the amine-initiated polyol has the chemical structure of I: 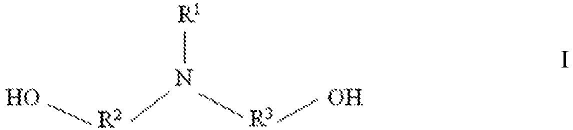 wherein R¹, R², and R³ are each independently a linear or branched alkyl group. For instance, can each independently be a C₁-C₆ linear or branched alkyl group. In some embodiments, the amine-initiated polyol comprises tertiary amines and secondary amines.

The amine-initiated polyol comprises a functionality of from 2 to 12, or from 3 to 10, or from 4 to 8. As used with respect to the polyol component, "functionality" refers to the number of isocyanate reactive sites per molecule. Further, the amine-initiated polyol comprises a hydroxyl number of from 5 to 1,830, or from 20 to 100, or from 31 to 40. As used with respect to the polyol component, "hydroxyl number" is a measure of the amount of reactive hydroxyl groups available for reaction. This number is determined in a wet analytical method and is reported as the number of milligrams of potassium hydroxide equivalent to the hydroxyl groups found in one gram of the sample. The most commonly used methods to determine hydroxyl number are described in ASTM D 4274 D. Still further, the amine-initiated polyol comprises a viscosity at 25°C of from 500 to 20,000 mPa-s, or from 1,000 to 15,000 mPa-s, or from 1,500 to 10,000 mPa-s.

Amine-initiated polyols suitable for use according to this disclosure are made by alkoxylating one or more amine initiators with one or more alkylene oxides.

The amount of the amine-initiated polyol in the adhesive composition is, by weight based on the weight of the adhesive composition (*i.e.,* the total weight of the isocyanate component and the polyol component), at least 2 wt%, or at least 10 wt%, or at least 20 wt%. The amount of the at least one amine-initiated polyol in the adhesive composition is, by weight based on the weight of the adhesive composition, not to exceed 100 wt%, or not to exceed 95 wt%, or not to exceed 90 wt%.

### Silicone-Based Additive

In some embodiments, the polyol component further comprises a silicone-based additive. In some embodiments, the silicone-based additive is an anti-foaming agent, or defoamer. In some embodiments, the silicone-based additive is wetting agent. In some embodiments, the polyol component comprises only an anti-foaming agent. In some embodiments, the polyol component comprises only a wetting agent. In some embodiments, the polyol component comprises both an anti-foaming agent and a wetting agent. It is thought that inclusion of a silicone-based additive enhances wettability and reduces air entrapment issues encountered with traditional solventless laminating adhesives.

The amount of the silicone-based additive in the adhesive composition is, by weight based on the weight of the polyol component, at least 0.05 wt%, or at least 0.1 wt%, or at least 0.2 wt%. The amount of the silicone-based additive in the adhesive composition is, by weight based on the weight of the polyol component, not to exceed 1 wt%, or not to exceed 0.5 wt%, or not to exceed 0.3 wt%.

Commercially-available examples of silicone-based additives suitable for use according to this disclosure include AF9000 NE^{™}, SAG 100^{™}, SAG 5693^{™} from Momentive, BYK 307^{™} from BYK Additives and Instruments, and DC 163^{™}, ACP 1500^{™}, DC 71 ^{™}, and DC 74^{™} from Dow Corning.

### Optional Additives

In some embodiments, a non-amine-initiated polyol may optionally be included in the adhesive composition, e.g., in the polyol component. Examples of the non-amine-initiated polyol include, but are not limited to, polyester polyols, polyether polyols, polycarbonate polyols, polyacrylate polyols, polycaprolactone polyols, polyolefin polyols, natural oil polyols, and combinations of two or more thereof. Preferably, the non-amine-initiated polyol has viscosity at 25°C of from 30 to 40,000 mPa-s, or from 50 to 30,000 mPa-s, or from 70 to 20,000 mPa-s, as measured by the method of ASTM D2196. Preferably, the non-amine-initiated polyol has viscosity of 100 to 10,000 mPa-s at 25°C, as measured by the method of ASTM D2196.

The amount of the non-amine-initiated polyol in the adhesive composition is at least 0 wt%, or at least 5 wt%, or at least 10 wt%. The amount of the non-amine-initiated polyol in the adhesive composition is not to exceed 98 wt%, or not to exceed 90 wt%, or not to exceed 80 wt%.

In some embodiments, an additive can optionally be included in the adhesive composition. Examples of such additives include, but are not limited to, tackifiers, plasticizers, rheology modifiers, adhesion promoters, antioxidants, fillers, colorants, surfactants, solvents, and combinations of two or more thereof.

### Laminate Formation

It is contemplated that the isocyanate component and the polyol component of the disclosed solventless adhesive composition are formulated separately and stored until it is desired to form a laminate structure. Preferably, the isocyanate component and polyol component are in a liquid state at 25°C. Even if the components are solid at 25°C, it is acceptable to heat the components as necessary to put them into a liquid state. As the pot-life of the adhesive composition is decoupled from the curing process, the components can be stored indefinitely.

A laminate comprising the disclosed adhesive compositions can be formed by applying the isocyanate and polyol components of the adhesive composition separately to two different substrates, such as two films. As used herein, a "film" is any structure that is 0.5 mm or less in one dimension and is 1 cm or more in both of the other two dimensions. A "polymer film" is a film that is made of a polymer or mixture of polymers. The composition of a polymer film is, typically, 80 percent by weight or more by weight one or more polymers.

For instance, a layer of the isocyanate component is applied to a surface of a first substrate. Preferably, the thickness of the layer of the isocyanate component on the first substrate is from 0.5 to 2.5 µm. A layer of the polyol component is applied to a surface of a second substrate. Preferably, the thickness of the layer of the polyol component on the second substrate is from 0.5 to 2.5 µm. By controlling the thickness of the layers applied to each substrate, the ratio of the components can be controlled. In some embodiments, the mix ratio of the isocyanate component to the polyol component in the final adhesive composition can be 100:100, or 100:90, or 100:80. The disclosed adhesive compositions are more forgiving than traditional adhesives and can accommodate some coating weight error (*e.g.,* up to about 10% coating weight error).

The surfaces of the first and second substrates are then run through a device for applying external pressure to the first and second substrates, such as nip roller. Bringing the isocyanate component and polyol component together forms a curable adhesive mixture layer. When the surfaces of the first and second substrates are brought together, the thickness of the curable adhesive mixture layer is 1 to 5 µm. The isocyanate component and polyol component begin mixing and reacting when the first and second substrates are brought together and the components come into contact with each other. This marks the beginning of the curing process.

Further mixing and reacting is accomplished as the first and second substrates are run through various other rollers and ultimately to a rewind roller. The further mixing and reacting occurs as the first and second substrates pass through rollers because the substrates each take longer or shorter paths than the other substrate across each roller. In this way, the two substrates move relative to one another, mixing the components on the respective substrates. Arrangements of such rollers in an application apparatus are commonly known in the art. The curable mixture is then cured or allowed to cure.

Suitable substrates in the laminate structure include films such as polymeric barrier films including, but not limited to, polyethylene-based films, polyamide-based films, and ethylene vinyl alcohol-based films. Some films optionally have a surface on which an image is printed with ink which may be in contact with the adhesive composition. The substrates are layered to form a laminate structure, with an adhesive composition according to this disclosure adhering one or more of the substrates together.

### Examples of the Disclosure

The present disclosure will now be explained in further detail by describing examples illustrating the disclosed adhesive compositions and existing adhesive compositions (Illustrative Examples "IE", Comparative Examples "CE", collectively, "the Examples"). However, the scope of the present disclosure is not, of course, limited to the Examples.

The Examples are prepared using the raw materials identified in Table 1.

**Table 1: Raw Materials**

| Matrix | Description | Characteristics | Supplier |
|---|---|---|---|
| SYMBIEX^{™} CR001 | Polyol | OH number (mg KOH/g) = 134; Viscosity (mPa-s, 25°C) = 15,000 | The Dow Chemical Company |
| CR 84^{™} | Polyol | OH number (mg KOH/g) = 320; Viscosity (mPa-s, 25°C) = 3,500 | The Dow Chemical Company |
| BESTER^{™} 101 | Aliphatic polyester polyol | OH number (mg KOH/g) = 112; Viscosity (mPa-s, 25°C) = 4,000 | The Dow Chemical Company |
| VORANOL^{™} CP 450 | Glycerol-initiated polyether polyol | OH number (mg KOH/g) = 450 | The Dow Chemical Company |
| TMP | Trimethylpropane | OH number (mg KOH/g) = 1254; Viscosity (mPa-s, 25°C) = solid | The Dow Chemical Company |
| SYMBIEX^{™} 100 | Polyisocyanate (MDI-Terminated resin) | % NCO = 13.50; Viscosity (mPa-s, 25°C) = 11,000 | The Dow Chemical Company |
| MOR-FREE^{™} L75-300 | Polyisocyanate (MDI-Terminated resin) | % NCO = 13.50; Viscosity (mPa-s, 25°C) = 3,000 | The Dow Chemical Company |
| MOR-FREE^{™} 200 C | Polyisocyanate (HDI-based resin) | % NCO = 21.80 Viscosity (mPa-s, 25°C) = 3,000 | The Dow Chemical Company |
| MOR-FREE^{™} L^{Plus} | Polyisocyanate (MDI and TDI-terminated resin) | % NCO = 12.37 Viscosity (mPa-s, 25°C) = 8,000 | The Dow Chemical Company |
| AF9000 NE^{™} | Silicone-based anti-foaming agent | Silicone/silica content, % = 100; Viscosity (mPa-s, 25°C) = 2,500 | Momentive |
| SAG 100^{™} | Silicone-based anti-foaming agent | Viscosity (mPa-s, 25°C) = 1,500 | Momentive |
| SAG 5693^{™} | Silicone-based anti-foaming agent | Viscosity (mPa-s, 25°C) = 350 | Momentive |
| BYK 307^{™} | Silicone-based wetting agent | Polyether- modified polydimethy lsiloxane | BYK Additives and Instruments |
| DC 163^{™} | Silicone-based anti-foaming agent | Polydimethylsiloxane and silica (reacted) | Dow Corning |
| ACP 1500^{™} | Silicone-based anti-foaming agent | Silicone/silica content, % = 100 | Dow Corning |
| DC71^{™} | Silicone-based wetting agent | Orango- modified silicone copolymer with silicone backbone and EO/PO groups | Dow Corning |
| DC 74^{™} | Silicone-based wetting agent | Organo- modified silicone copolymer with a silicone backbone and EO/PO groups | Dow Corning |

Laminate structures comprising the adhesive systems described in Table 2 are prepared on a Nordmeccanica DUPLEX ONE-SHOT ^{™} laminator having the following machine parameters: temperature at dosing gap of 45°C; temperature at application roll of 55°C; temperature at nip roll of 55°C; nip pressure of 3 bars; lay-on pressure of 1 bar; rewind tension of 150 N; hardness at nip roll of 90 shore. As indicated in Table 2, the OH Component (*i.e.,* the polyol component) is applied to the Laminate OH Part, and the NCO Component (*i.e*., the isocyanate component) is applied to the Laminate NCO Part prior to the substrates being brought together for lamination.

**Table 2: Examples Prepared with PE-EVOH Substrates**

| Example | OH component | Laminate OH part | NCO component | Laminate NCO part | Maximum lamination speed (m/min) for good optics / comments |
|---|---|---|---|---|---|
| CE1 | SYMBIEX^{™} CR 001 | PE-EVOH | SYMBIEX^{™} 100 | Printed PET window | Less than 150 m/min; at 150 m/min, big bubbles due to CO₂ formation observed |
| CE2 | SYMBIEX^{™} CR 001 + 0.2%wt DC 163 | PE-EVOH | SYMBIEX^{™} 100 | Printed PET window | Less than 150 m/min; at 150 m/min, big bubbles due to CO₂ formation observed |
| IE1 | SYMBIEX^{™} CR 001 | PE-EVOH | 96%wt MOR-FREE^{™} L75-300 + 4%wt MOR-FREE^{™} 200C 96 wt. % of MDI-based + 4 wt.% HDI-based | Printed PET window | 150 m/min; good optics |
| IE2 | SYMBIEX^{™} CR 001 | PE-EVOH | 85%wt MOR-FREE^{™} LPlus + 15%wt MOR-FREE^{™} 200C 85 wt. % of MDI-based + 15 wt.% HDI-based | Printed PET window | 150 m/min; good optics |
| IE3 | SYMBIEX^{™} CR 001 + 0.2%wt DC 163 | PE-EVOH | 85%wt MOR-FREE^{™} LPlus + 15%wt MOR-FREE^{™} 200C 85 wt. % of | Printed PET window | 200 m/min; acceptable, |
| | | | MDI-based + 15 wt.% HDI-based | | |
| IE4 | SYMBIEX^{™} CR 001 + 0.2%wt DC 163 | PE-EVOH | 93% MOR-FREE^{™} L75-300 + 7% MOR-FREE^{™} 200C 93 wt. % of MDI-based + 7 wt.% HDI-based | Unprinted PET | 250 m/min Good optics, |

As indicated in Table 2, the combination of an isocyanate component comprising an isocyanate blend (*i.e.,* MDI, TDI and/or HDI) and a polyol comprising an anti-foaming agent, allows the lamination speed when using PE-EVOH/PET structures to be increased from less than 150 m/min up to 250 m/min.

Laminate structures comprising the adhesive systems described in Table 3 are prepared on a Nordmeccanica SUPERCOMBI^{™} 3000 conventional laminator having the following machine parameters: temperature at dosing gap of 40°C; temperature at application roll of 40°C; temperature at nip roll of 50°C; nip pressure of 3 bars; lay-on pressure of 1.5 bar; rewind tension of 150 N; hardness at nip roll of 85 shore.

**Table 3: Examples Prepared on Conventional Laminator**

| Example | Description | Appearance @ lamination of 200 m/min (after 7 days curing) |
|---|---|---|
| CE3 | [MOR-FREE^{™} L plus : CR 84] [100:45] OPA // PE-EVOH, 200 m/min | Acceptable appearance |
| CE4 | [MOR-FREE^{™} L plus : (99.98% CR84+0.2%wt DC 71)] [100:45] | Not acceptable, bubbles observed |
| | OPA // PE-EVOH, 200 m/min | |
| CE5 | [MOR-FREE^{™} L plus : (58.8%wt BESTER^{™} 101 + 40%wt VORANOL^{™} CP 450 + 1%wt TMP + 0.2%wt DC 71)] [100:55] OPA // PE-EVOH, 250 m/min | Not acceptable, bubbles observed |
| CE6 | [(95%wt MOR-FREE^{™} L75-300 + 5%wt MOR-FREE^{™} 200C) : (58.8%wt BESTER^{™} 101 + 40%wt VORANOL^{™} CP 450 + 1%wt TMP + 0.2%wt DC 71)] [100:55] OPA // PE-EVOH, 250 m/min | Not acceptable, bubbles observed |

The Examples identified in Table 3 demonstrate that the appearance of the laminates is not improved by using an isocyanate blend or by incorporating a polydimethylsiloxane-based wetting agent or anti-foaming agent. In fact, the laminate produced in CE4, CE5, and CE6 had worse appearance than the CE3 laminate.

When using a Nordmeccanica ONE-SHOT^{™} laminator, the use of an isocyanate component comprising an isocyanate blend together with the use of a silicone-based additive in the polyol component provides for enhanced optics on laminates comprising a polymeric barrier substrate even at relatively-higher lamination speeds (e.g., up to 250 m/min).

## Claims

1. A two-component solventless adhesive composition, comprising:
an isocyanate component comprising an isocyanate blend; and
a polyol component comprising:
an amine-initiated polyol comprising two or more primary hydroxyl groups and a backbone incorporating tertiary amines, wherein the amine-initiated polyol comprises a functionality of from 2 to 12, a hydroxyl number of from 5 to 1,830, and a viscosity at 40°C of from 500 to 20,000 mPa-s; and
a silicone-based additive.

2. The two-component solventless adhesive composition according to claim 1, wherein the isocyanate blend comprises at least two selected from the group consisting of methylene diphenyl diisocyanate, toluene diisocyanate, hexamethylene diisocyanate, xylylene diisocyanate and combinations thereof.

3. The two-component solventless adhesive composition according to claim 1, wherein the silicone-based additive is an anti-foaming agent.

4. The two-component solventless adhesive composition according to claim 1, wherein the anti-foaming agent comprises up to 100 percent by weight silicone/silica.

5. The two-component solventless adhesive composition according to claim 1, wherein the silicone-based additive is a wetting agent.

6. The two-component solventless adhesive composition according to claim 1, wherein the wetting agent comprises a polyether-modified polydimethylsiloxane.

7. The two-component solventless adhesive composition according to claim 1, wherein the silicone-based additive is selected from the group consisting of an anti-foaming agent, a wetting agent, and combinations thereof.

8. The two-component solventless adhesive composition according to claim 1, wherein the amine-initiated polyol has the structure I: 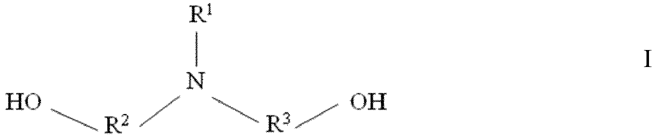 wherein R¹, R², and R³ are independently a linear or branched alkyl group.

9. A laminate structure comprising the two-component solventless adhesive composition according to claim 1.

10. The laminate structure of claim 9, further comprising a polymeric barrier substrate.

## Patentansprüche

1. Eine lösungsmittelfreie Zweikomponenten-Klebstoffzusammensetzung, die Folgendes beinhaltet:
eine Isocyanatkomponente, die ein Isocyanatgemisch beinhaltet; und
eine Polyolkomponente, die Folgendes beinhaltet:
ein mit Amin initiiertes Polyol, das zwei oder mehr primäre Hydroxylgruppen und eine Hauptkette, die tertiäre Amine inkorporiert, beinhaltet, wobei das mit Amin initiierte Polyol eine Funktionalität von 2 bis 12, eine Hydroxylzahl von 5 bis 1,830 und eine Viskosität bei 40 °C von 500 bis 20,000 mPa-s beinhaltet; und
ein auf Silikon basierendes Additiv.

2. Lösungsmittelfreie Zweikomponenten-Klebstoffzusammensetzung gemäß Anspruch 1, wobei das Isocyanatgemisch mindestens zwei beinhaltet, die aus der Gruppe ausgewählt sind, die aus Methylendiphenyldiisocyanat, Toluoldiisocyanat, Hexamethylendiisocyanat, Xylylendiisocyanat und Kombinationen davon besteht.

3. Lösungsmittelfreie Zweikomponenten-Klebstoffzusammensetzung gemäß Anspruch 1, wobei das auf Silikon basierende Additiv ein Antischaummittel ist.

4. Lösungsmittelfreie Zweikomponenten-Klebstoffzusammensetzung gemäß Anspruch 1, wobei das Antischaummittel zu bis zu 100 Gewichtsprozent Silikon/Siliciumdioxid beinhaltet.

5. Lösungsmittelfreie Zweikomponenten-Klebstoffzusammensetzung gemäß Anspruch 1, wobei das auf Silikon basierende Additiv ein Benetzungsmittel ist.

6. Lösungsmittelfreie Zweikomponenten-Klebstoffzusammensetzung gemäß Anspruch 1, wobei das Benetzungsmittel ein mit Polyether modifiziertes Polydimethylsiloxan beinhaltet.

7. Lösungsmittelfreie Zweikomponenten-Klebstoffzusammensetzung gemäß Anspruch 1, wobei das auf Silikon basierende Additiv aus der Gruppe ausgewählt ist, die aus einem Antischaummittel, einem Benetzungsmittel und Kombinationen davon besteht.

8. Lösungsmittelfreie Zweikomponenten-Klebstoffzusammensetzung gemäß Anspruch 1, wobei das mit Amin initiierte Polyol die Struktur I aufweist: 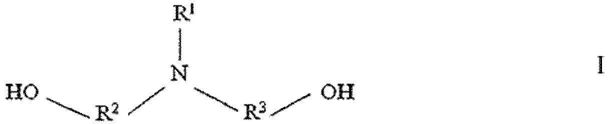 wobei R¹, R² und R³ unabhängig eine lineare oder verzweigte Alkylgruppe sind.

9. Eine Laminatstruktur, die die lösungsmittelfreie Zweikomponenten-Klebstoffzusammensetzung gemäß Anspruch 1 beinhaltet.

10. Laminatstruktur gemäß Anspruch 9, die ferner ein polymeres Barrieresubstrat beinhaltet.

## Revendications

1. Une composition adhésive sans solvant à deux constituants, comprenant :
un constituant isocyanate comprenant un mélange homogène d'isocyanates ; et
un constituant polyol comprenant :
un polyol amorcé par une amine comprenant deux groupes hydroxyle primaires ou plus et un squelette incorporant des amines tertiaires, le polyol amorcé par une amine comprenant une fonctionnalité allant de 2 à 12, un indice d'hydroxyle allant de 5 à 1 830, et une viscosité à 40 °C allant de 500 à 20 000 mPa-s ; et
un additif à base de silicone.

2. La composition adhésive sans solvant à deux constituants selon la revendication 1, dans laquelle le mélange homogène d'isocyanates comprend au moins deux isocyanates sélectionnés dans le groupe constitué de diisocyanate de diphénylméthylène, de diisocyanate de toluène, de diisocyanate d'hexaméthylène, de diisocyanate de xylylène et de combinaisons de ceux-ci.

3. La composition adhésive sans solvant à deux constituants selon la revendication 1, dans laquelle l'additif à base de silicone est un agent antimoussant.

4. La composition adhésive sans solvant à deux constituants selon la revendication 1, dans laquelle l'agent antimoussant comprend jusqu'à 100 pour cent en poids de silicone/silice.

5. La composition adhésive sans solvant à deux constituants selon la revendication 1, dans laquelle l'additif à base de silicone est un agent mouillant.

6. La composition adhésive sans solvant à deux constituants selon la revendication 1, dans laquelle l'agent mouillant comprend un polydiméthylsiloxane modifié par polyéther.

7. La composition adhésive sans solvant à deux constituants selon la revendication 1, dans laquelle l'additif à base de silicone est sélectionné dans le groupe constitué d'un agent antimoussant, d'un agent mouillant, et de combinaisons de ceux-ci.

8. La composition adhésive sans solvant à deux constituants selon la revendication 1, dans laquelle le polyol amorcé par une amine a la structure I : 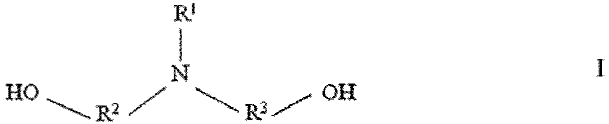 dans laquelle R¹, R², et R³ sont indépendamment un groupe alkyle linéaire ou ramifié.

9. Une structure de stratifié comprenant la composition adhésive sans solvant à deux constituants selon la revendication 1.

10. La structure de stratifié de la revendication 9, comprenant en outre un substrat barrière polymère.
